# EUROPEAN PATENT APPLICATION

(11) **EP 1 785 904 A2**
(43) Date of publication of application: **16.05.2007**
(21) Application number: 06123324.3
(22) Date of filing: 01.11.2006
(51) Int. Cl.: G06F 21/00

(54) **Digital rights management method and system**

(30) Priority: 09.11.2005 KR 20050107134
(71) Applicant: Samsung Electronics Co., Ltd., Suwon-si 442-742 Gyeonggi-Do (KR)
(72) Inventor: Kwon, Won-seok, Yeongtong-gu Suwon-si Gyeonggi-do (KR)
(74) Representative: Robinson, Ian Michael

(57) **Abstract**

A digital rights management (DRM) method and system are provided. The method includes a DRM playback device (300, 350) changing a Rights Object (RO), transmitting the RO to an RO issuance authority (400, 450), and the RO issuance authority (400, 450) receiving and storing the RO.

## Description

Methods and systems consistent with the present invention relate to a rights object storage method in a digital rights management system and, more particularly, to a digital rights management method and system that can transmit information about a changed rights object to a rights object issuance authority and store it therein.

Recently, research into digital rights management (DRM) has been actively conducted, and commercial services to which DRM is applied have been introduced or are being introduced. Unlike analog data digital data has characteristics of enabling duplication without loss, facilitating reuse and processing, and being easily distributed to third parties. Furthermore, digital data can be duplicated and distributed at a very small cost. Meanwhile, considerable cost, effort and time are required to manufacture digital content composed of the digital data, so that technology for protecting digital copyrights is required. For this purpose, the range of the application of the DRM is gradually being enlarged.

Although efforts to protect digital content have been made in the past, the efforts are based on the prevention of illegal access to digital content. For example, access to the digital content is licensed only to users who have paid for it, and users who have not paid for it cannot access the digital content. However, in the case where a person, having paid for digital content and having accessed it, intentionally distributes it to a third party, many problems occur in that the third party can use the digital content without making payment for it. In contrast, although the DRM allows anybody to unconditionally access the digital content, a specific license called a Rights Object (RO) is required if someone intends to decrypt and use the digital content. Accordingly, when the DRM is applied, the digital content can be more effectively protected.

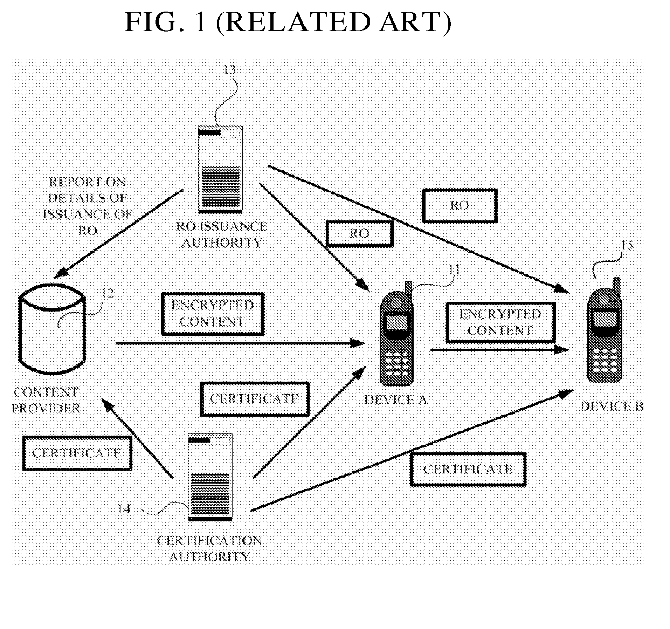

Figure 1 is a diagram showing the concept of typical DRM. Principal details of the DRM relate to the handling of content (hereinafter referred to as encrypted content), which is protected using an encryption method or a scrambling method, and a license that enables access to the encrypted content. Encrypted content refers to content protected by DRM. In this case, an RO associated with the content is necessary to play it back. Figure 1 illustrates devices A and B 11 and 15 that desire to access the encrypted content, a content provider 12 that supplies content, an RO issuance authority 13 that issues ROs, including licenses for using content, and a certification authority 14 that issues certificates.

Device A 11 can acquire desired content from the content provider 12. In this case, the content is encrypted content. Device A 11 can purchase an RO, in which a license enabling the use of the encrypted content is included, from the RO issuance authority 13. Device A 11, which has purchased the RO, can use the encrypted content. The encrypted content can be unrestrainedly circulated or distributed, so that device A 11 can unrestrainedly transfer the encrypted content to device B 15. In order to play back the transferred encrypted content, device B 15 also requires an RO. Such an RO can be acquired from the RO issuance authority 13. Meanwhile, the certification authority 14 issues certificates that contain messages indicating the identifiers of devices whose public keys have been identified, certificate serial numbers, the name of the certification authority that issued the certificates, the public keys of the corresponding devices, and the times of expiration of the certificates. The respective devices determine whether devices with which they communicate are certified devices using certificates issued by the certification authority 14. Although the certificates are embedded in the respective devices at the time of manufacture of the devices 11 and 15, they can be reissued by the certification authority 14 in the case where the available period of the certificates expired. The respective certificates are signed using private keys issued by the certification authority 14 in order to indicate that the authentication thereof has been made, so that the respective devices can identify the certificates of other devices with which they communicate, using the public keys issued by the certification authority 14.

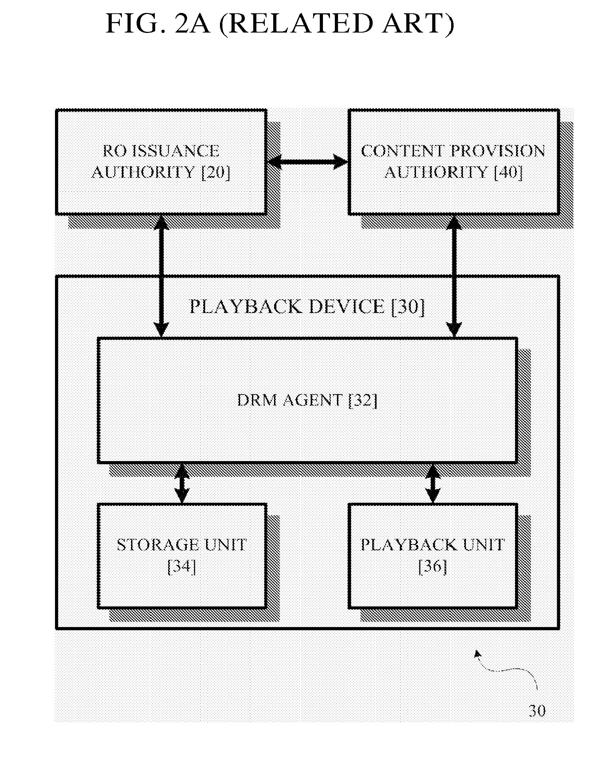

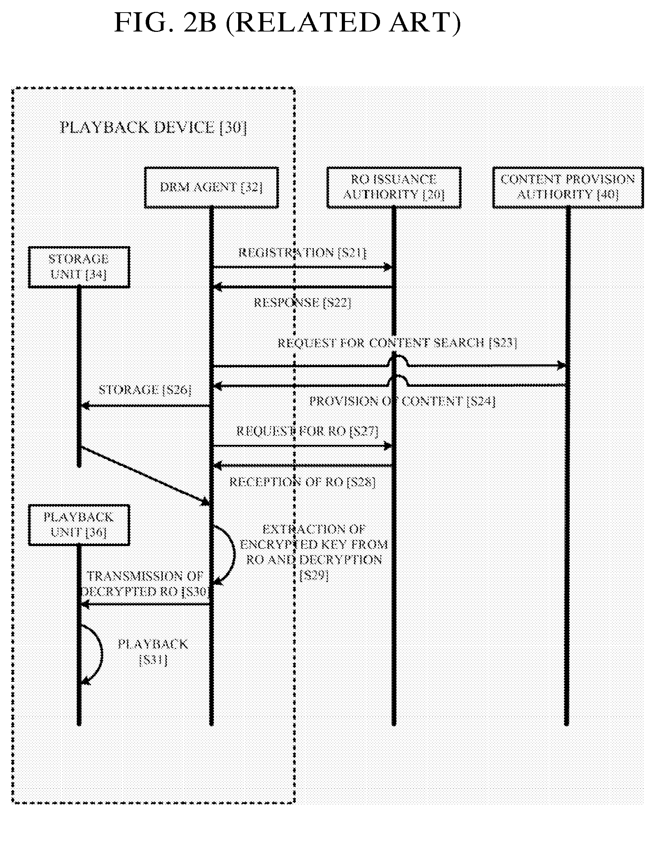

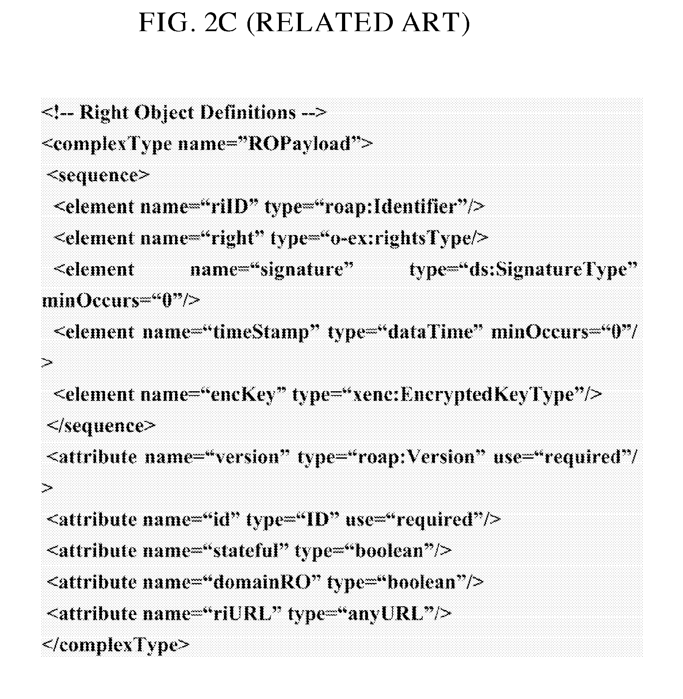

Various DRM systems have been proposed to solve copyright problems for digital media. A description of an Open Mobile Alliance (OMA) DRM system, which can be regarded merely as an open DRM system, is made with reference to Figures 2A, 2B and 2C below.

Figures 2A is a diagram showing the construction of a related art OMA DRM system, Figure 2B is a diagram showing a process of operating the related art OMA DRM system, and Figure 2C is a diagram showing the extensible Markup Language (XML) schema of an RO in the related art OMA DRM system.

The OMA DRM system of Figure 2A will be described first. Three elements, that is, a playback device 30, an RO issuance authority 20, and a content provision authority 40, operate in conjunction with each other. The playback device 30 includes a DRM agent 32 that performs DRM-related operation, a storage unit 34 that stores DRM content, and a playback unit 36 that plays back the DRM content. The function of the DRM agent 32 is defined in the OMA DRM, and the functions of the storage unit 34 and the playback unit 36 are excluded from the technical range handled by the OMA DRM. The content provision authority 40 provides the DRM content in an encrypted form. The RO issuance authority 20 operates in conjunction with the content provision authority 40 and provides an RO for playing back the DRM content.

With reference to Figure 2B, the overall operation of acquiring and playing back encrypted DRM content will be described. The playback device 30, including the DRM agent 32, registers itself with the RO issuance authority to use the OMA DRM system at operation S21, and receives a response for the registration at operation S22. The registered playback device 30 requests a search for the DRM content, which is possessed by the content provision authority 40, through the DRM agent 32 at operation S23, and downloads found DRM content at operation S24. The DRM content acquired through the DRM agent 32 is stored in the storage unit 34 of the playback device 30 at operation S26. The DRM agent 32 requests an RO, which is necessary for playback, from the RO issuance authority 20 to play back the stored content at operation S27, and receives the requested RO at operation S28. In this case, the payment of cost for the use of the DRM content may be made at the time at which the RO is acquired. Under the condition in which the DRM content and the RO has been acquired in this manner, the DRM agent 32 extracts an encryption key from the RO to decrypt the encrypted DRM content and performs the decryption thereof at operation S29 and transfers the decrypted content to the playback unit 36 at operation S30, and playback is finally performed at operation S31. Furthermore, restrictions on use of the DRM content may be described in the RO, so that DRM agent 32 must perform a function of checking the authority of the use thereof based on details described in the RO.

The RO in the OMA DRM has the form of an XML type document in which the authority for use of the DRM content will be described. In this case, the RO is classified as a domain RO or a content RO, which is shown in Figure 2C. Since the XML schema shown in Figure 2C has already been defined in the OMA DRM system to provide details of the RO, a detailed description thereof is omitted here.

Changeable status information, such as restrictions on the number of times the DRM content may be used (for example, for playback and printing), is recorded in the RO, so that the DRM agent 32 must store the RO therein to repeatedly use DRM content within a range of corresponding authority for use. This is accompanied by the assumption that the playback device 30 must have a non-volatile storage device therein. However, in a playback device that supports a playback function, such as a data streaming function, cases where the non-volatile storage device does not exist occur. In this case, a problem occurs in that, if DRM content is used only once after the acquisition of an RO from the RO issuance authority, the DRM content cannot be reused. Meanwhile, if the RO for the corresponding DRM content is acquired again from the RO issuance authority, the payment of a charge for repeated acquisition of the RO may be made, therefore a problem occurs in that the payment of the charge is unreasonable for users.

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Preferred features of the invention will be apparent from the dependent claims, and the description which follows.

The present invention provides a DRM method and system, which, when a playback device that cannot store an RO whose status can be changed is used, can return a changed RO to an RO issuance authority and store it therein without storing the changed RO in the playback device.

According to an aspect of the present invention, there is provided a DRM method including a DRM playback device changing details of a RO; transmitting the changed RO to an RO issuance authority; and the RO issuance authority receiving and storing the transmitted RO.

The transmitting of the changed RO includes setting a location, at which the changed RO will be stored in the RO issuance authority, to a Uniform Resource Locator (URL), and the DRM playback device transmitting the RO to the RO issuance authority via the URL.

The transmitting of the changed RO may include constructing the changed RO according to a newly defined Rights Object Acquisition Protocol (ROAP) extended protocol format, and transmitting the RO, which has been constructed according to the protocol format, to the RO issuance authority.

According to another aspect of the present invention, there is provided a DRM system including a DRM playback device playing back DRM content and an RO issuance authority issuing an RO, wherein the DRM playback device transmits the RO, details of which has been changed, to the RO issuance authority; and the RO issuance authority receives the transmitted RO and stores the received RO therein.

The DRM playback device includes a DRM agent acquiring information about a location in the RO issuance authority in which the changed RO will be stored; and an RO transmission unit transmitting the RO to the RO issuance authority according to the acquired information about a location.

The DRM playback device may include a DRM agent transmitting the RO, which has been constructed to conform to a newly defined ROAP extended protocol format, to the RO issuance authority.

The above and other aspects of the present invention will be more clearly understood from the following detailed description taken in conjunction with the accompanying drawings, in which:
Figure 1 is a diagram showing the concept of related art DRM;
Figure 2A is a diagram showing the construction of a related art OMA DRM system;
Figure 2B is a diagram showing a process of operating the related art OMA DRM system;
Figure 2C is a diagram showing the XML schema of an RO in the related art OMA DRM system;
Figure 3 is a block diagram showing the construction of a DRM system to which, DRM methods according to an exemplary embodiment of the present invention, a storage method using a URL is applied;
Figure 4 is a diagram showing an extended RO XML schema used for the method applied to Figure 3;
Figure 5 is a diagram showing the overall flow of the method of Figure 3;
Figure 6 is a block diagram showing the construction of a DRM system to which, of DRM methods according to an exemplary embodiment of the present invention, a storage method using an extended ROAP is applied;
Figure 7 is a diagram showing a protocol used for the storage method using an extended ROAP, which is one of the DRM methods according to an exemplary embodiment of the present invention; and
Figure 8 is a diagram showing the overall flow of the method of Figure 6.

The exemplary embodiments of the present invention will be described with reference to the accompanying drawings. However, the present invention is not limited to the exemplary embodiments disclosed below, but may be implemented in various ways. Furthermore, the exemplary embodiments described herein are provided to merely to assist in an understanding of the present invention. The same reference numerals are used throughout the drawings to designate the same or similar components.

The term "RO" may be regarded as a kind of license, including the right to use encrypted content and constraints on the right. The RO includes not only the definition of the right to content and the constraints on the right, but also the rights for the RO itself. An example of the right to the content may be playback, and examples of the constraints may be the number of times for playback, and playback period limits. The rights for the RO itself are exemplified by "move" or "copy." That is, an RO granting the right to move may be moved to other devices or to a Secure Multimedia Card (SMC), and an RO granting the right to copy may be copied to the other devices or the SMC. It should be noted that the description of the term "RO" given above is given merely to assist in the understanding of exemplary embodiments of the present invention, thus, the term "RO" is not interpreted as limiting the technical spirit of the exemplary embodiments of the present invention as long as they are not described to limit the present invention.

In the case where a non-volatile storage for storing a changed RO does not exist in a playback device even though an RO whose status can be changed has been changed, the sequence of a method of returning the changed RO back to an RO issuance authority and storing it therein, without storing it in the playback device, will be described. After details of the RO have been changed by the DRM playback device, the DRM playback device transmits information about the changed RO to the RO issuance authority. Thereafter, the RO issuance authority receives the information about the changed RO and stores it therein.

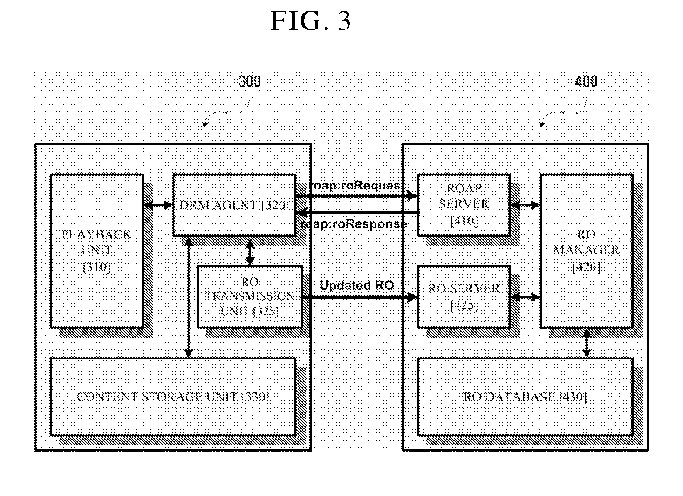

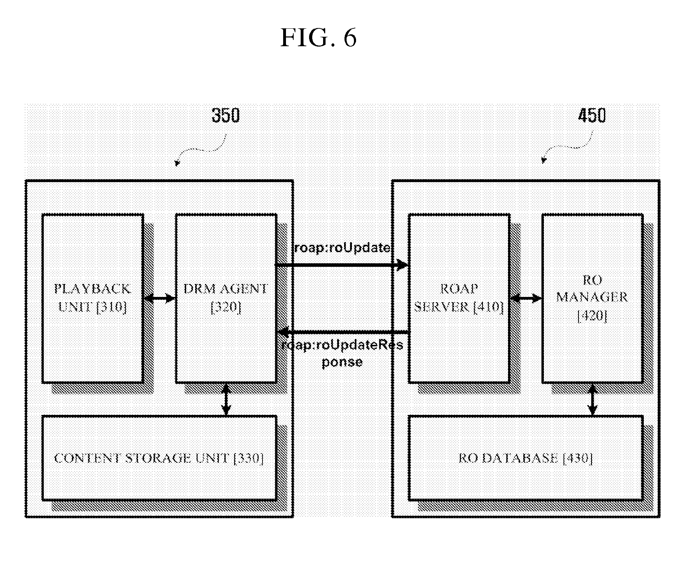

In exemplary embodiments of the present invention, two types of storage methods are proposed to store ROs. A first method is to store an RO using a Uniform Resource Locator (URL) obtained by extending the XML schema of the RO, which is illustrated in Figures 3 to 5. A second method is to store an RO using a new extension ROAP protocol obtained by extending an ROAP protocol, which is illustrated in Figures 6 to 8.

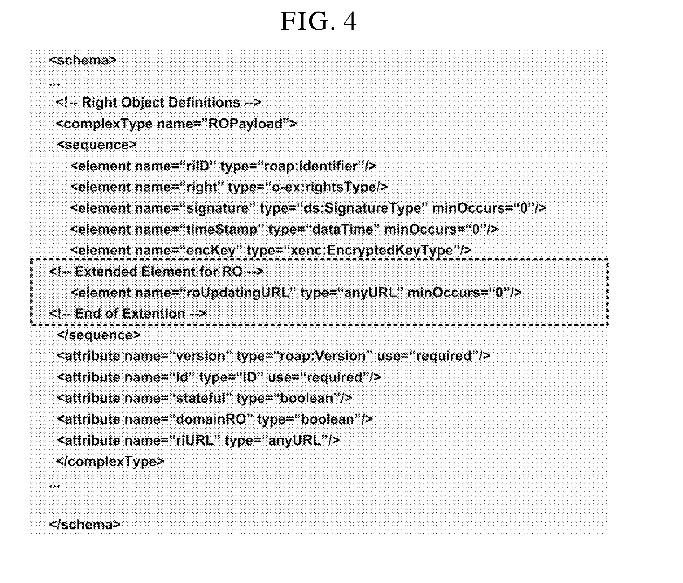

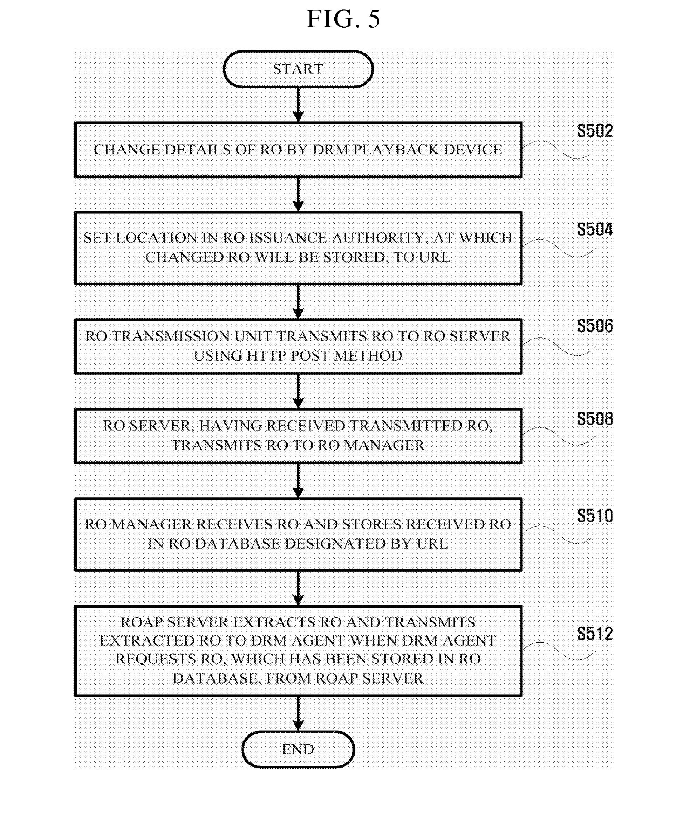

First, the first method will be described in detail with reference to Figures 3 to 5. Figure 3 is a block diagram showing the construction of a DRM system to which, of DRM methods according to an exemplary embodiment of the present invention, a storage method using a URL is applied, Figure 4 is a diagram showing an extended RO XML schema used for the method applied to Figure 3, and Figure 5 is a diagram showing the overall flow of the method of Figure 3.

Referring to Figure 3, the DRM system using the first method includes a playback device 300 that functions to transmit an RO, details of which have been changed, to the RO issuance authority, and the RO issuance authority 400 that receives the transmitted RO and stores it therein. The playback device 300 includes a playback unit 310, a DRM agent 320, an RO transmission unit 325, and a content storage unit 330. The RO issuance authority 400 includes an ROAP server 410, an RO manager 420, an RO server 425, and an RO database 430.

The playback unit 310 functions to play back the acquired DRM content, and performs the playback according to details and constraints assigned to the RO.

In the case where details of an RO whose status can be changed are changed, the DRM agent 320 functions to acquire a path for a location at which the RO will be stored, from the RO issuance authority 400.

The RO transmission unit 325 functions to transmit the RO to the RO issuance authority 400 according to the location information acquired using the above-described method. In particular, the RO is transmitted to the RO server 425, which will be described later, using the Hyper Text Transfer Protocol (HTTP) POST method. In this case, the location information is provided by adding the value of an element for a URL to the XML schema, including details of the changed RO. An extended XML schema, to which the value of the element is added, is illustrated in a box indicated by the dotted line in Figure 4. An URL generally refers to a method of indicating the exact location of a corresponding web document on the Internet. Furthermore, an URL refers to a standard instruction system that indicates locations of various resources on the Internet. From Figure 4, it can be seen that the value of the element for the URL is assigned "roUpdatingURL."

The content storage unit 330 is a unit in which the content has been stored to play it back, and functions to transfer found content to the playback unit 310 under the control of the DRM agent 320 when the playback of the content is performed.

The functions of the elements of the RO issuance authority 400 are described. The RO server 425 functions to receive the RO transmitted by the RO transmission unit 325. The RO manager 420 functions to receive the RO from the RO server 425. The RO database 430 functions to receive the RO from the RO manager 420 and store the received RO according to the value of the element for the URL added to the XML schema. Furthermore, when a signal for requesting the RO according to the ROAP protocol is transmitted by the DRM agent 320 after the RO has been stored in the RO database 430, the ROAP server 410 functions to receive the signal, extract the RO according to the received signal, and transmit the extracted RO to the DRM agent 320 again.

The overall flow of the storage method based on the first method will be described with reference to Figure 5. First, when a change in details of an RO occurs due to the playback of content by the DRM playback device 300, the details of the RO are changed at operation S502. Thereafter, the storage location in the RO issuance authority 400, in which the changed RO will be stored, is set to a URL at operation S504, and the DRM playback device 300 transmits the RO to the RO issuance authority 400 according to the URL. In particular, the RO transmission unit 325 of the DRM playback device 300 transmits the RO to the RO server 425 of the RO issuance authority 400 using the HTTP POST method at operation S506. At operation S504, the operation of setting the storage location of the RO to the URL is performed using a method of adding the value of the element for the URL to an XML schema for the changed RO. In this case, it can be seen that the result of the addition is illustrated in a box that is indicated by the dotted line in Figure 4. The RO server 425, which has received the transmitted location information, transmits the RO to the RO manager 420 at operation S508. The RO manager 420 receives the RO, and the received RO is stored at the predetermined location in the RO database 430, which is designated by the URL at operation S510.

In the case where the DRM agent 320 of the DRM playback device 300 requests the withdrawal of the RO, which has been stored in the RO database 430, from the ROAP server 410 of the RO issuance authority 400, the ROAP server 410 withdraws the RO and transmits the withdrawn RO to the DRM agent 320 at operation S512.

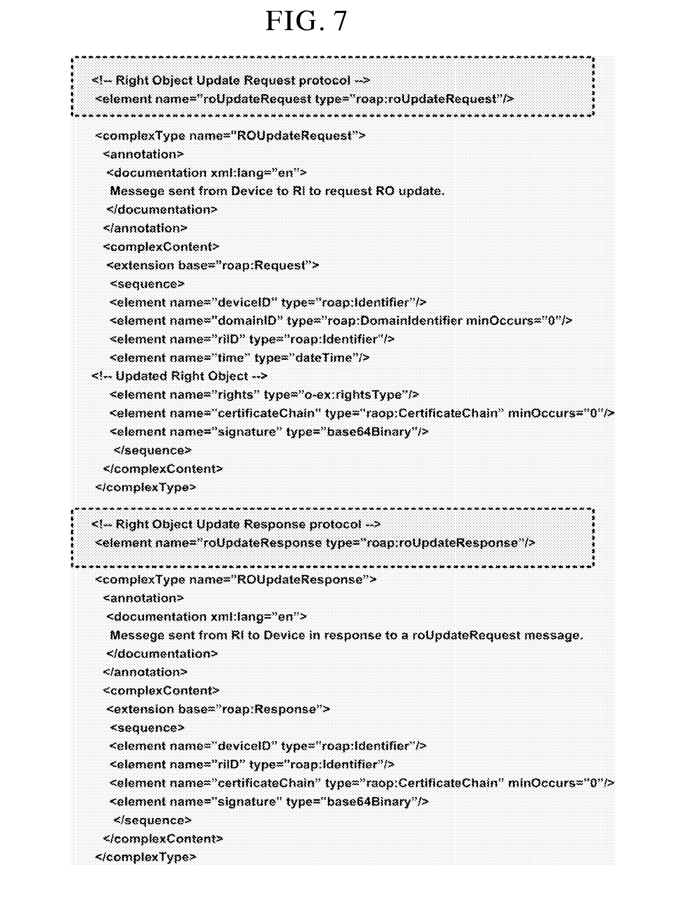

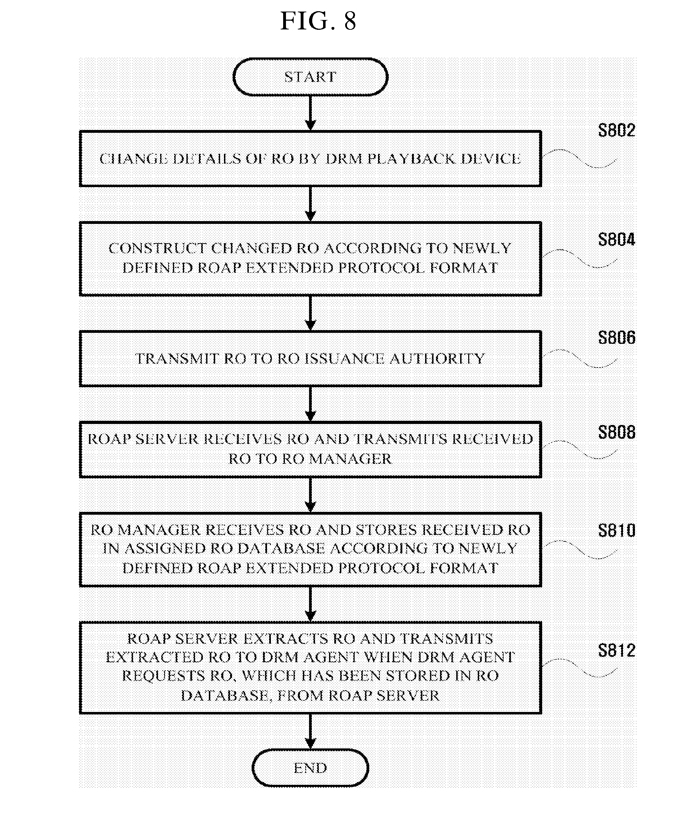

Now, the storage method based on the second method will be described in detail with reference to Figures 6 to 8. Figure 6 is a block diagram showing the construction of a DRM system to which, of DRM methods according to an exemplary embodiment of the present invention, a storage method using an extended ROAP is applied, Figure 7 is a diagram showing the protocol used for the storage method using an extended ROAP, which is one of the DRM methods according to an exemplary embodiment of the present invention, and Figure 8 is a diagram showing the overall flow of the method of Figure 6.

Referring to Figure 6, the construction of the DRM system based on the second method is similar to that of the system based on the first method. That is, the DRM system based on the second method includes the playback device 350 that functions to transmit the RO whose details have been changed to an RO issuance authority 450, and the RO issuance authority 450 that receives the transmitted RO and stores it therein.

Unlike the DRM playback device 300 of Figure 3, the DRM playback device 350 does not include the RO transmission unit 325. The DRM playback device 350 includes the playback unit 310, the DRM agent 320, and the content storage unit 330. Furthermore, unlike the RO issuance authority 400 of Figure 3, the RO issuance authority 450 does not include the RO server 425. The RO issuance authority 450 includes the ROAP server 410, the RO manager 420, and the RO database 430. For these reasons, the construction of the DRM system based on the second method is somewhat different from that of the system based on the first method. In the second method, the DRM agent 320 processes commands based on the extended ROAP protocol, so that the element that is the RO transmission unit, having a function of transmitting the RO, is not necessary, therefore the DRM agent 320 is responsible for transmitting the RO, which has been constructed so as to conform to the extended ROAP protocol format, to the RO issuance authority 400. In contrast, the first method is not a storage method based on the ROAP protocol, so that the DRM agent 320, which functions to process the commands based on the ROAP protocol, cannot transmit an RO depending on URL information, therefore the RO transmission unit 325 that transmits the RO exists separately.

Furthermore, the ROAP server 410 of the RO issuance authority 450 functions to receive the RO from the DRM agent 320, and the RO manager 420 functions to receive the RO from the ROAP server 410. In the same manner, the RO database 430 functions to receive the RO from the RO manager 420 and store it according to the newly defined ROAP extended protocol format. Meanwhile, when the reading of the RO stored in the RO database 430 is requested by the DRM agent 320, the ROAP server 410 functions to extract the RO and transmit the extracted RO to the DRM agent 320.

The overall flow of the storage method based on the second method will be described with reference to Figure 8. First, when a change in details of an RO occurs due to the playback of content by the DRM playback device 350, the details of the RO are changed in the same manner as in the first method at operation S802. The ROAP schema is extended, and information about the changed RO is constructed according to the ROAP extended protocol format, which is based on a new protocol that is newly defined in advance, at operation S804. In this case, the term "ROAP extended protocol" refers to a new protocol obtained by extending an existing ROAP schema and newly defining a message format to conform to the ROAP schema, which is illustrated in Figure 7. The ROAP extended protocol is used to transmit the RO based on the ROAP protocol.

From the dotted box provided in the upper portion of Figure 7, it can be seen that a new protocol format for the request roUpdateRequest of the RO will be described. Furthermore, it can be seen, when the dotted box provided in the lower portion is observed, that a new protocol format for a response roUpdateResponse corresponding to the request is described. The structure of such an extended protocol does not require changes in elements constituting the existing DRM system. However, the DRM agent 320 and the RO issuance authority 450 must support the structure of the protocol. Thereafter, the operation of transmitting RO, which has been constructed according to the extended protocol formats, to the RO issuance authority 450 is performed at operation S806. When the ROAP server 410 of the RO issuance authority 450 receives the transmitted RO and transmits the received RO to the RO manager 420 at operation S808, the RO manager 420 receives the RO and stores it at an assigned location in the RO database 430 according to the extended protocol format at operation S810.

When the DRM agent 320 of the DRM playback device 350 requests the withdrawal of the RO, which has been stored in the RO database 430, from the ROAP server 410, the operation of the ROAP server 410 withdrawing the RO and transmitting the withdrawn RO to the DRM agent 320 may be additionally performed at operation S812.

The term "unit," as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and be configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or may be further separated into additional components and modules.

Furthermore, the components and modules may be implemented to operate on one or more Central Processing Units (CPUs) residing in a device or a security multimedia card.

Meanwhile, it will be apparent to those skilled in the art that the scope of the DRM method according to the exemplary embodiments of the present invention extends to a computer-readable storage medium storing program code for executing the above-described method in a computer.

In accordance with the DRM method and system of the exemplary embodiments of the present invention, the storage location of the RO, which is assumed by the OMA DRM system, is not limited to the playback device, and the RO can be assigned to the RO issuance authority and stored and managed therein in the case where a playback device, in which a permanent storage device is not provided, is used.

Effects of the exemplary embodiments of the present invention are not limited to the above-described effects, and other effects that are not described may be understood by those skilled in the art from the accompanying claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A Digital Rights Management (DRM) method comprising:
modifying a Rights Object (RO) at a DRM playback device (300, 350);
transmitting the RO from the DRM playback device (300, 350) to an RO issuance authority (400,450); and
receiving and storing the RO at the RO issuance authority (400, 450).

2. The DRM method of claim 1, wherein the transmitting of the RO comprises:
setting a location, at which the RO will be stored in the RO issuance authority (400, 450), to a Uniform Resource Locator (URL); and
transmitting the RO from the DRM playback device (300, 350) to the RO issuance authority (400, 450) via the URL.

3. The DRM method of claim 2, wherein the setting of the location comprises setting the location by adding an element value for the URL to an extensible Markup Language (XML) schema for the RO.

4. The DRM method of claim 2 or 3, wherein the transmitting of the RO comprises transmitting the RO from an RO transmission unit (325) of the DRM playback device (300, 350) to an RO server (425) of the RO issuance authority (400, 450) using a Hyper Text Transfer Protocol (HTTP) POST method.

5. The DRM method of claim 4, wherein the receiving and storing of the RO comprises:
transmitting the RO from the RO server (425) to an RO manager (420), which exists in the RO issuance authority (400, 450); and
receiving the RO and storing the RO in an RO database (430) designated by the URL at the RO manager (420).

6. The DRM method of claim 5, further comprising:
extracting the RO at a Rights Object Acquisition Protocol (ROAP) server (410) and transmitting the RO from the ROAP server (410) to a DRM agent (320), if the DRM agent (320) in the DRM playback device (300, 350) requests the RO, which has been stored in the RO database (430), from the ROAP server (410) in the RO issuance authority (400, 450).

7. The DRM method of claim 1, wherein the transmitting of the RO comprises:
constructing the RO according to a Rights Object Acquisition Protocol (ROAP) extended protocol format; and
transmitting the RO, which has been constructed according to the ROAP extended protocol format, to the RO issuance authority (400, 450).

8. The DRM method of claim 7, wherein the receiving and storing of the RO comprises:
receiving the RO at a ROAP server (410) of the RO issuance authority (400, 450), and transmitting from the ROAP server (410) the RO to an RO manager (420); and
receiving the RO at a RO manager (420) and storing the RO in a designated RO database (430) according to the ROAP extended protocol format.

9. The DRM method of claim 8, further comprising extracting the RO at the ROAP server (410) and transmitting the RO from the ROAP server (410) to the DRM agent (320), if a DRM agent (320) of the DRM playback device (300, 350) requests the RO, which has been stored in the RO database (430), from the ROAP server (410).

10. A computer-readable storage medium storing program code for executing a Digital Rights Management (DRM) method, the method comprising:
modifying a Rights Object (RO) at a DRM playback device (300, 350);
transmitting the RO from the DRM playback device (300, 350) to an RO issuance authority (400, 450); and
receiving and storing the RO at the DRM playback device (300, 350).

11. A Digital Rights Management (DRM) system comprising:
a DRM playback device (300, 350) for playing back DRM content; and
a Rights Object (RO) issuance authority (400, 450) for issuing an RO, wherein:
the DRM playback device (300, 350) modifies and transmits the RO to the RO issuance authority (400, 450); and
the RO issuance authority (400, 450) receives and stores the RO.

12. The DRM system of claim 11, wherein the DRM playback device (300, 350) comprises:
a DRM agent (320) which acquires information about a location in the RO issuance authority (400, 450) in which the RO will be stored; and
an RO transmission unit (325) which transmits the RO to the RO issuance authority (400, 450) according to the acquired information about the location.

13. The DRM system of claim 12, wherein the information about the location is indicated by adding an element value for the Uniform Resource Locator (URL) to an extensible Markup Language (XML) schema for the RO.

14. The DRM system of claim 12 or 13, wherein the RO issuance authority (400, 450) comprises:
an RO server (425) receiving the RO transmitted by the RO transmission unit (325);
an RO manager (420) receiving the RO from the RO server (425); and
an RO database (430) receiving the RO from the RO manager (420) and storing the RO according to the information about the location.

15. The DRM system of claim 14, wherein the RO transmission unit (325) transmits the RO to the RO server (425) using a Hyper Text Transfer Protocol (HTTP) POST method.

16. The DRM system of claim 14, where in the RO issuance authority (400, 450) further comprises a Rights Object Acquisition Protocol (ROAP) server (410) which extracts the RO and transmits the RO to the DRM agent (320), if the DRM agent (320) requests the RO, which has been stored in the RO database (430).

17. The DRM system of claim 11, wherein the DRM playback device (300, 350) comprises a DRM agent (320) which transmits the RO, which has been constructed to conform to a Rights Object Acquisition Protocol (ROAP) extended protocol format, to the RO issuance authority (400, 450).

18. The DRM system of claim 17, wherein the RO issuance authority (400, 450) comprises:
an ROAP server (410) which receives the RO transmitted by the DRM agent (320);
an RO manager (420) which receives the RO from the ROAP server (410); and
an RO database (430) which receives the RO from the RO manager (420) and stores the RO according to the ROAP extended protocol format.

19. The DRM system of claim 18, wherein the ROAP server (410) extracts the RO and transmits the extracted RO to the DRM agent (320), if a request for the RO, which has been stored in the RO database (430), is received from the DRM agent (320).
